# EUROPEAN PATENT APPLICATION

(11) **EP 3 936 247 A1**
(43) Date of publication of application: **12.01.2022**
(21) Application number: 20903383.6
(22) Date of filing: 17.12.2020
(51) Int. Cl.: B09C 1/10, B01F 7/24

(54) **SOIL HEAVY METAL REMEDIATION APPARATUS**

(30) Priority: 17.12.2019 CN 201922291898 U
(71) Applicant: Guangdong Technion Israel Institute of Technology, Shantou City, Guangdong Province 515063 (CN)
(72) Inventor: AN, Che, Shantou, Guangdong 515063 (CN); WANG, Weiyi, Shantou, Guangdong 515063 (CN); LI, Weila, Shantou, Guangdong 515063 (CN); ZHENG, Weihe, Shantou, Guangdong 515063 (CN)
(74) Representative: Mola, Edoardo
(86) International application number: PCT/CN2020/137329
(87) International publication number: WO 2021/121339

(57) **Abstract**

A soil heavy metal remediation apparatus, wherein stirring parts (1) can extend into a container (11) by means of an opening (12), first liquid pipelines (4) can output a liquid by means of liquid output holes (12) and allow the liquid to fall into the container (11) by means of the opening (12), first gas pipelines (8) can output a gas by means of vent holes and allow the gas to be led to the opening (12), second driving units (3) can drive the stirring parts (1) to be separated from the container (11) by means of the opening (12), and the container (11) can be separated from a stirring system, a liquid system and a gas system. The liquid system and the gas system can provide a substance basis for microbial remediation technology; the container (11) can be separated from the stirring system, the liquid system and the gas system, which helps to improve the versatility and maintainability of the soil heavy metal remediation apparatus.

## Description

### TECHNICAL FIELD

The disclosure relates to a microbial reactor, in particular to a remediation device for heavy metal polluted soil.

### BACKGROUND

The waste of electronic or electrical products may easily cause soil to be polluted by heavy metals. The common heavy metals may include cadmium (Cd), copper (Cu), nickel (Ni), lead (Pb), chromium (Cr) and the like. The spread of toxic metals through environmental factors and the enrichment of food chain may have adverse effects on human health, so it is crucial to perform heavy metal remediation on soil.

Microorganism remediation technology is non-destructive, green economy and environment-friendly. Applying the ability of urease-producing microorganisms to carry out carbonate biomineralization to solidification and remediation of toxic heavy metals may improve the mechanical properties and impermeability of soil simultaneously, thus controlling metal leaching.

In the existing technology, a stirring system may be equipped to stir soil so as to make soil uniform in texture. However, the remediation device for heavy metal polluted soil using the microorganism remediation technology not only needs to make the soil uniform in texture, but also needs to provide liquid and gas for the soil to promote the remediation of the soil by microorganisms.

### SUMMARY

An objective of the disclosure is to provide a remediation device for heavy metal polluted soil suitable for microorganism remediation technology to at least solve one of the technical problems existed in the existing technology.

The technical scheme adopted to solve the above technical problem is as follows.

A remediation device for heavy metal polluted soil includes: a stirring system including a plurality of stirring assemblies, each stirring assembly including a stirring part, a first driving unit and a second driving unit, where the stirring part is provided with a helicoid, and the first driving unit is configured to drive the stirring part to rotate around an axis of the helicoid; a liquid system including a plurality of first liquid pipelines, where each of the first liquid pipelines is provided with a plurality of liquid output holes; a gas system including a plurality of first gas pipelines, where each of the first gas pipelines is provided with a plurality of vent holes; and a container, where the container is provided with an opening, the stirring part is configured to extend into the container through the opening, the first liquid pipelines are configured to output liquid through the liquid output holes and make the liquid fall into the container through the opening, the first gas pipelines are configured to output gas through the vent holes and lead the gas to the opening, the second driving unit is configured to drive the stirring part to separate from the container through the opening, and the container is capable of being separated from the stirring system, the liquid system and the gas system.

The above remediation device for heavy metal polluted soil has at least the following beneficial effects:
The liquid system and the gas system can provide a material basis for the microorganism remediation technology. The first liquid pipeline can input liquid into the container from outside of the container through the liquid output holes and the opening, the first gas pipeline can input gas into the container from outside of the container through the vent holes and the opening, and the stirring assembly can make the stirring part enter and exit from the container through the second driving unit, so that the container can be separated from the stirring system, the liquid system and the gas system, which is beneficial to improving the universality and maintainability of the remediation device for heavy metal polluted soil.

In a possible implementation of the disclosure, the liquid system further includes a second liquid pipeline, one end of each first liquid pipeline is communicated with the second liquid pipeline. The second liquid pipeline can supply liquid to all the first liquid pipelines simultaneously, which is beneficial to simplifying the pipeline structure of the liquid system.

In a possible implementation of the disclosure, the liquid system further includes a liquid storage tank and a water pump, where the liquid storage tank is communicated with the second liquid pipeline, and the water pump is configured to convey liquid in the liquid storage tank to the second liquid pipeline and the first liquid pipelines. The liquid storage tank can store nutrient solution, which is beneficial to stable liquid supply of the liquid system.

In a possible implementation of the disclosure, the gas system further includes a second gas pipeline, one end of each first gas pipeline is communicated with the second gas pipeline. The second gas pipeline can supply gas to all the first gas pipelines simultaneously, which is beneficial to simplifying the pipeline structure of the gas system.

In a possible implementation of the disclosure, the gas system further includes a gas valve for controlling on-off state of the second gas pipeline. The gas valve enables the gas system to be switched on or off, thus realizing continuous gas supply or intermittent gas supply.

In a possible implementation of the disclosure, the remediation device for heavy metal polluted soil further includes a control system, which is electrically connected with the liquid system and the gas system, and the control system is configured to control a flow rate of fluid in the liquid system and the gas system. The control system is beneficial to improving the automation degree of the remediation device for heavy metal polluted soil, and is also beneficial to accurately controlling the supply amount of liquid and gas.

In a possible implementation of the disclosure, the container is further provided with a liquid discharge port, which is communicated with the container and capable of being closed. The liquid discharge port is beneficial to discharging the waste liquid in the container.

### BRIEF DESCRIPTION OF DRAWINGS

The above-mentioned and/or additional aspects and advantages of the disclosure will be obvious and easy to understand from the description of embodiments with reference to the following drawings, in which:
Fig. 1 is a structural schematic diagram according to an embodiment of the disclosure;
Fig. 2 is a schematic diagram of a container according to an embodiment of the disclosure in a detached state; and
Fig. 3 is a structural schematic diagram of a stirring assembly according to an embodiment of the disclosure.

Reference numerals:
stirring part 1, first driving unit 2, second driving unit 3, first liquid pipeline 4, second liquid pipeline 5, water pump 6, liquid storage tank 7, first gas pipeline 8, second gas pipeline 9, gas valve 10, container 11, opening 12, control system 13.

### DETAILED DESCRIPTION

This section will describe the embodiments of the present disclosure in detail. Some embodiments of the present disclosure are shown in the accompanying drawings, which is used to supplement the description of the text part of the specification with graphics, so that those having ordinary skill in the art can intuitively and vividly understand each technical feature and overall technical scheme of the disclosure, but cannot be understood the same as a limitation to the protection scope of the disclosure.

It should be understood in the description of the disclosure that terms such as "upper", "lower", "front", "rear", "left", "right" , etc. indicate direction or position relationships shown based on the drawings, and are only intended to facilitate the description of the disclosure and the simplification of the description rather than to indicate or imply that the indicated device or element must have a specific direction or constructed and operated in a specific direction, and therefore, shall not be understood as a limitation to the disclosure.

In the description of the disclosure, the meaning of "several" is one or more, while the meaning of "a plurality of" is two or more. Greater than, less than, exceeding, etc. are understood as excluding this number, while above, below, within, etc. are understood as including this number. First and second if mentioned are only used for the purpose of distinguishing technical features, rather than being understood to indicate or imply relative importance or implicitly indicate the number of indicated technical features or implicitly indicate the sequence relationship of indicated technical features.

In the description of the disclosure, unless otherwise specifically defined, terms such as "arrangement", "installation," and "connection" shall be understood in a broad sense. For those having ordinary skills in the art, the specific meanings of the above terms in the disclosure may be reasonably determined in combination with the specific content of the technical scheme.

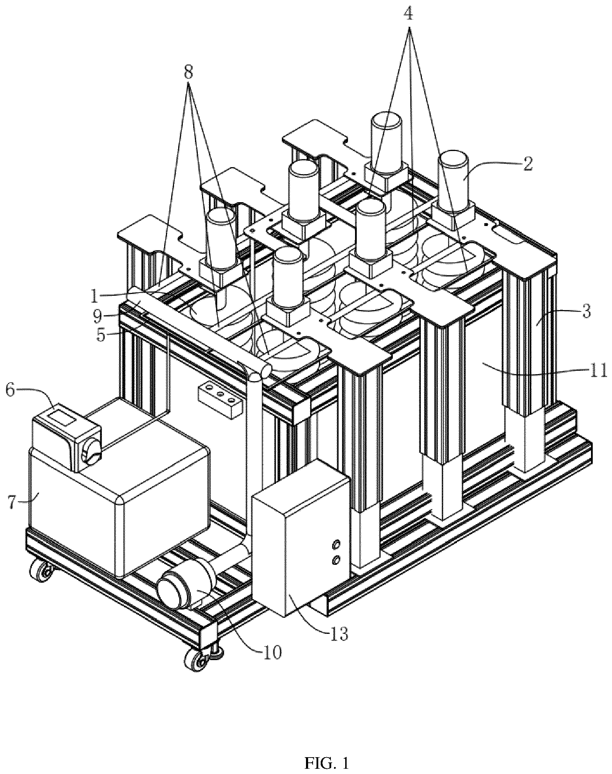

Referring to Figs. 1 to 3, a remediation device for heavy metal polluted soil includes: a stirring system including a plurality of stirring assemblies, each stirring assembly including a stirring part 1, a first driving unit 2 and a second driving unit 3, where the stirring part 1 is provided with a helicoid, and the first driving unit 2 may drive the stirring part 1 to rotate around an axis of the helicoid; a liquid system including a plurality of first liquid pipelines 4, where each of the first liquid pipelines 4 is provided with a plurality of liquid output holes; a gas system including a plurality of first gas pipelines 8, where each of the first gas pipelines is provided with a plurality of vent holes; and a container 11, where the container 11 is provided with an opening 12, the stirring part 1 may extend into the container 11 through the opening 12, the first liquid pipelines 4 may output liquid through the liquid output holes and make the liquid fall into the container 11 through the opening 12, the first gas pipelines 8 may output gas through the vent holes and lead the gas to the opening 12, the second driving unit 3 may drive the stirring part 1 to separate from the container 11 through the opening 12, and the container 11 may be separated from the stirring system, the liquid system and the gas system.

The above remediation device for heavy metal polluted soil has at least the following beneficial effects:
The liquid system and the gas system can provide a material basis for the microorganism remediation technology. The first liquid pipeline 4 can input liquid into the container 11 from outside of the container 11 through the liquid output holes and the opening 12, the first gas pipeline 8 can input gas into the container 11 from outside of the container 11 through the vent holes and the opening 12, and the stirring assembly can make the stirring part 1 enter and exit from the container 11 through the second driving unit 3, so that the container 11 can be separated from the stirring system, the liquid system and the gas system, which is beneficial to improving the universality and maintainability of the remediation device for heavy metal polluted soil.

With regard to the stirring system, the first driving unit 2 is a motor, and the second driving unit 3 is a lifting device. The second driving unit 3 includes, but is not limited to, a linear motor, a hydraulic cylinder and an air cylinder.

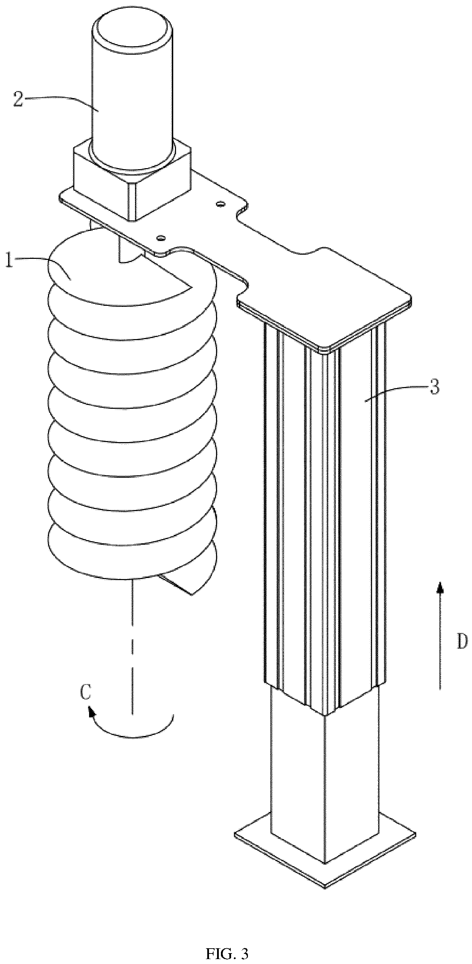

With regard to the stirring part 1, when the stirring part 1 rotates, soil in the container 11 may rise along with the helicoid, so that the soil at the bottom of the container 11 may be turned over to the top of the container 11, which is beneficial for the soil to fully coming into contact with the liquid and gas input from the outside and may enhance the bioremediation effect. The first driving unit 2 may drive the stirring part 1 to rotate in direction C as shown in Fig. 3. The second driving unit 3 may drive the stirring part 1 and the first driving unit 2 to lift up and down in direction D as shown in Fig. 3.

With regard to the first liquid pipeline 4, liquid output holes are provided on the surface of the first liquid pipeline 4, and the liquid output holes penetrate through the wall of the first liquid pipeline 4. The liquid output holes are arranged in the length direction of the first liquid pipeline 4, so that liquid may be simultaneously output to all parts of the container 11. The first liquid pipeline 4 is arranged above the container 11, and liquid may be dripped into the container 11 through the opening 12.

With regard to the first gas pipeline 8, vent holes are provided on the surface of the first gas pipelines 8, and the vent holes penetrate through the pipe wall of the first gas pipeline 8. The vent holes are arranged in the length direction of the first gas pipeline 8, so that gas may be simultaneously output to all parts of the container 11. The first gas pipeline 8 is arranged above the container 11, and gas may be sprayed into the container 11 through the opening 12.

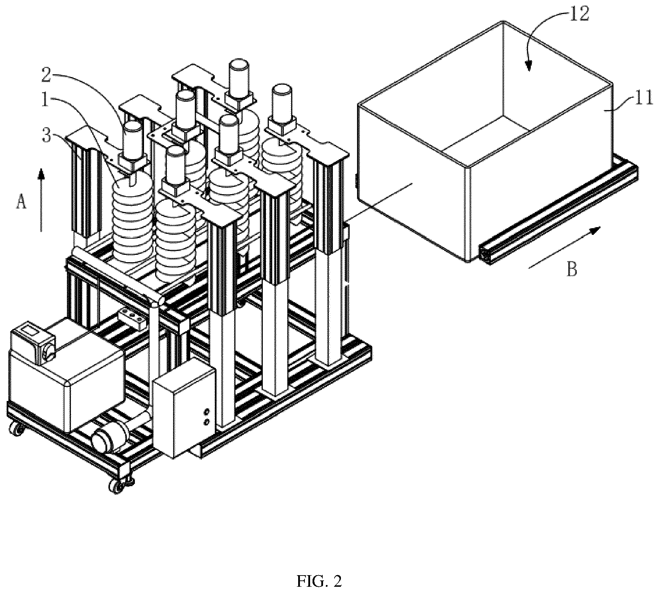

With regard to the container 11, the container 11 is rectangular in shape, and the top of the container 11 is open to form the opening 12. The second driving unit 3 may drive the stirring part 1 and the first driving unit 2 to rise in direction A as shown in Fig. 2, so that the stirring part 1 is separated from the container 11. The container 11 may be drawn out of the remediation device for heavy metal polluted soil in direction B as shown in Fig. 2, thereby facilitating the transfer of the soil in the container 11 and facilitating the maintenance and cleaning of the container 11, which is beneficial to improving the universality and maintainability of the remediation device for heavy metal polluted soil.

In this embodiment, the liquid system further includes a second liquid pipeline 5, one end of each first liquid pipeline 4 is communicated with the second liquid pipeline 5. The second liquid pipeline 5 can supply liquid to all the first liquid pipelines 4 simultaneously, which is beneficial to simplifying the pipeline structure of the liquid system.

With regard to the second liquid pipeline 5, the second liquid pipeline 5 is perpendicular to each first liquid pipeline 4, the number of the first liquid pipelines 4 being three.

In this embodiment, the liquid system further includes a liquid storage tank 7 and a water pump 6, where the liquid storage tank 7 is communicated with the second liquid pipeline 5, and the water pump 6 may convey liquid in the liquid storage tank 7 to the second liquid pipeline 5 and the first liquid pipelines 4. The liquid storage tank 7 can store nutrient solution, which is beneficial for stable liquid supply of the liquid system.

With regard to the liquid storage tank 7, the liquid storage tank 7 is rectangular in shape, and the liquid storage tank 7 is arranged below the water pump 6.

In this embodiment, the gas system further includes a second gas pipeline 9, one end of each first gas pipeline 8 is communicated with the second gas pipeline 9. The second gas pipeline 9 can supply gas to all the first gas pipelines 8 simultaneously, which is beneficial to simplifying the pipeline structure of the gas system.

With regard to the second gas pipeline 9, the second gas pipeline 9 is perpendicular to each first gas pipeline 8, the number of the first gas pipelines 8 being three.

In this embodiment, the gas system further includes a gas valve 10, which may control the on-off state of the second gas pipeline 9. The gas valve 10 enables the gas system to be switched on or off, thus realizing continuous gas supply or intermittent gas supply.

In this embodiment, the remediation device for heavy metal polluted soil further includes a control system 13. The control system 13 is electrically connected with the liquid system and the gas system, and the control system 13 may control the flow rates of fluid in the liquid system and the gas system. The control system 13 is beneficial to improving the automation degree of the remediation device for heavy metal polluted soil, and is also beneficial to accurately controlling the supply amount of liquid and gas.

With regard to the control system 13, the control system 13 may be realized by means of a computer. The control system 13 may include electronically controlled flow valves which may be arranged in the first liquid pipelines 4, the second liquid pipeline 5, the first gas pipelines 8 or the second gas pipeline 9, so as to realize flow control.

In this embodiment, the container 11 is further provided with a liquid discharge port which is communicated with the container 11 and may be closed. The liquid discharge port is beneficial to discharging the waste liquid in the container 11.

With regard to the liquid discharge port, the liquid discharge port is provided at the bottom of the container 11 and may be closed. The liquid discharge port is not shown in the drawings. The liquid discharge port may be of a liquid discharge structure in the existing technology.

## Claims

1. A remediation device for heavy metal polluted soil, comprising:
a stirring system comprising a plurality of stirring assemblies, each stirring assembly comprising a stirring part, a first driving unit and a second driving unit, wherein the stirring part is provided with a helicoid, and the first driving unit is configured to drive the stirring part to rotate around an axis of the helicoid;
a liquid system comprising a plurality of first liquid pipelines, wherein each of the first liquid pipelines is provided with a plurality of liquid output holes;
a gas system comprising a plurality of first gas pipelines, wherein each of the first gas pipelines is provided with a plurality of vent holes; and
a container, wherein the container is provided with an opening, the stirring part is configured to extend into the container through the opening, the first liquid pipelines are configured to output liquid through the liquid output holes and make the liquid fall into the container through the opening, the first gas pipelines are configured to output gas through the vent holes and lead the gas to the opening, the second driving unit is configured to drive the stirring part to separate from the container through the opening, and the container is capable of being separated from the stirring system, the liquid system and the gas system.

2. The remediation device for heavy metal polluted soil of claim 1, wherein the liquid system further comprises a second liquid pipeline, one end of each first liquid pipeline is communicated with the second liquid pipeline.

3. The remediation device for heavy metal polluted soil of claim 2, wherein the liquid system further comprises a liquid storage tank and a water pump, wherein the liquid storage tank is communicated with the second liquid pipeline, and the water pump is configured to convey liquid in the liquid storage tank to the second liquid pipeline and the first liquid pipelines.

4. The remediation device for heavy metal polluted soil of claim 3, wherein the gas system further comprises a second gas pipeline, one end of each first gas pipeline is communicated with the second gas pipeline.

5. The remediation device for heavy metal polluted soil of claim 4, wherein the liquid system further comprises a gas valve for controlling on-off state of the second gas pipeline.

6. The remediation device for heavy metal polluted soil of claim 5, further comprising:
a control system, wherein the control system is electrically connected with the liquid system and the gas system, and the control system is configured to control a flow rate of fluid in the liquid system and the gas system.

7. The remediation device for heavy metal polluted soil of any one of claims 1-6, wherein the container is further provided with a liquid discharge port which is communicated with the container and capable of being closed.
